Europäisches Patentamt

European Patent Office

Office européen des brevets

(19)

(11) **EP 1 426 936 A2**

(12) **EUROPEAN PATENT APPLICATION**

(43) Date of publication:
**09.06.2004 Bulletin 2004/24**

(51) Int Cl.$^7$: **G11B 7/09**, G11B 7/085

(21) Application number: **03257509.4**

(22) Date of filing: **28.11.2003**

| | |
|---|---|
| (84) Designated Contracting States:<br>**AT BE BG CH CY CZ DE DK EE ES FI FR GB GR<br>HU IE IT LI LU MC NL PT RO SE SI SK TR**<br>Designated Extension States:<br>**AL LT LV MK**<br><br>(30) Priority: **29.11.2002 KR 2002075298<br>11.04.2003 KR 2003023060**<br><br>(71) Applicant: **SAMSUNG ELECTRONICS CO., LTD.<br>Suwon-City, Kyungki-do (KR)** | (72) Inventors:<br>• **Park, Chang-soo<br>Paldal-gu Suwon-si Gyeonggi-do (KR)**<br>• **Lee, Jong-gyou<br>Paldal-gu Suwon-si Gyeonggi-do (KR)**<br>• **Ko, Seong-kyun<br>Paldal-gu, Suwon-si, Gyeonggi-do (KR)**<br><br>(74) Representative: **Robinson, Ian Michael et al<br>Appleyard Lees,<br>15 Clare Road<br>Halifax HX1 2HY (GB)** |

(54) **Method and apparatus to generate tracking error signal, optical storage drive and lead-in control method**

(57) A method and apparatus to stably generate a tracking error signal even for a compact disc (CD) with a pit depth of about $\lambda/4$ or a narrow track pitch in an optical storage drive, an optical storage drive using the same, and a lead-in control method of the optical storage drive. The method includes detecting reflected laser beams using a photo detector (32); and generating a first tracking error signal based on optical signals received by the photo detector (32), using a differential phase detection (DPD) method and outputting the first tracking error signal as the tracking error signal.

FIG. 12

EP 1 426 936 A2

**Description**

The present invention relates to a method and apparatus to generate a tracking error signal in an optical storage drive, and more particularly, to a method and apparatus to stably generate a tracking error signal even with a compact disc (CD) with a pit depth of around $\lambda/4$ or a narrow track pitch, an optical storage drive using the method and apparatus, and a lead-in control method of the optical storage drive.

In general, optical discs on which data is written and from which data is read by lasers include CDs and digital versatile discs (DVDs), on which rewriting is not possible, compact discs recordable (CD-Rs) on which recording is possible only once, and DVDs random access memory (DVDs-RAM) on which multiple rewriting is possible, amongst others. In an optical storage drive that uses an optical disc, a tracking error signal is obtainable using a push-pull (PP) method, a 3-beam method, a differential phase detection (DPD) method, or a differential push-pull (DPP) method.

The 3-beam method, which was used in conventional CD drives, is capable of stably generating a tracking error signal regardless of a depth of a pit of a CD. However, the 3-beam method is not used any longer because the 3-beam method is not compatible with a recordable disc such as a CD-R.

The DPD method is an improvement over the PP method and is differentiated from other methods in that the DPD method generates a tracking error signal using a phase difference. This method is useable for DVDs but cannot be used for recordable discs, such as CDs-R and DVDs-RAM, which have blank regions in which data is not recorded.

The DPP method is mainly used for a recordable disc, such as a CD-R or a DVD-RAM, on which a wobble signal is recorded.

Conventionally, a tracking error signal is generated in a CD drive using the 3-beam method, in a DVD drive using the DPD method, and in a drive which can drive recordable/read-only discs, such as CDs-R and DVDs-RAM, using the DPP method.

However, as optical storage drives, which can drive CDs, DVDs, recordable discs and read-only discs, become more popular, the DPP method is used even when reproducing data from a CD. For this reason, an optical storage drive is manufactured to include a pickup which allows a use of the DPD method for DVDs and of the DPP method for CDs, and a pickup, which allows a use of the 3-beam method is rarely, individually manufactured.

Since the DPP method is based on the PP method, a magnitude of a tracking error signal generated using the DPP method is too small to satisfactorily perform a tracking control when reproducing data from a CD with a pit depth of around $\lambda/4$ or a narrow track pitch, thereby causing a lead-in failure or preventing data from being reproduced from the CD. As such, a method and an apparatus generating a tracking error signal, an optical storage drive using the same, and a lead-in control method of the optical storage drive are needed.

According to the present invention there is provided an apparatus and method as set forth in the appended claims. Preferred features of the invention will be apparent from the dependent claims, and the description which follows.

The present invention provides a method and apparatus to generate a tracking error signal stably even when reproducing data from a compact disc (CD) with a pit depth of around $\lambda/4$ or a narrow track pitch are provided.

Also, an optical storage drive is provided in which the method and the apparatus to generate the tracking error signal stably even when reproducing the data from the compact disc (CD) with the pit depth of around $\lambda/4$ or the narrow track pitch are used.

Further, a lead-in control method of the optical storage drive is provided using the method to generate the tracking error signal.

Other aspects and/or advantages of the invention will be set forth in part in the description which follows and, in part, will be obvious from the description, or may be learned by practice of the invention.

In one aspect of the present invention there is provided a method of generating a tracking error signal using laser beams reflected from a compact disc (CD) surface, comprising: detecting the reflected laser beams using a photo detector; and generating a first tracking error signal based on optical signals received by the photo detector, using a differential phase detection (DPD) method and outputting the first tracking error signal as the tracking error signal.

In another aspect of the invention, an apparatus is provided to generate a tracking error signal using laser beams reflected from a compact disc (CD) surface, comprising: a first input terminal receiving optical detection signals, indicating intensities of the reflected laser beams, that are input; a first tracking error signal generator that receives an optical detection signal input from the first input terminal and generates a first tracking error signal based on the optical detection signal using a DPD method; and an output terminal through which the first tracking error signal generated by the first tracking error signal generator is output.

In another aspect of the present invention, an optical storage drive is provided capable of reproducing information recorded on a compact disc (CD), comprising: an optical source that emits laser beams having wavelengths appropriate to reproduce the information from the CD; an optical detector that receives laser beams reflected from a surface of the CD and generates optical detection signals corresponding to intensities of the reflected laser beams; and a tracking error signal generating unit that generates tracking error signals in response to the optical detection signals generated by a photo detector, wherein the tracking error signal generating unit comprises: a first input terminal that is included in an external photo detector and through which the optical detection signals, which indicate the intensities of the reflected laser beams, are input; a first tracking error signal generator that receives the optical detection signals input from the first input terminal and generates a first tracking error signal based on the optical detection signals using a DPD method; and an output terminal to which the first tracking error signal generated by the first tracking error signal generator is output.

In still another aspect of the present invention, a lead-in control method of an optical storage drive is provided that uses a DPD method for a DVD and a DPP method for a CD, the method comprising: detecting a level of a tracking error signal generated using the DPP method and a level of an RF signal when a media loaded into the optical storage drive is the CD; determining a type of the loaded media based on the level of the tracking error signal generated by the DPP method and the level of the RF signal; detecting an amplification gain to obtain a tracking error signal within a desired dynamic range; comparing the amplification gain with a predetermined threshold; and performing a lead-in routine using the DPP method when the amplification gain is smaller than the predetermined threshold, and performing the lead-in routine using the DPD method otherwise.

For a better understanding of the invention, and to show how embodiments of the same may be carried into effect, reference will now be made, by way of example, to the accompanying diagrammatic drawings in which:

Figure 1 is a diagram illustrating a structure of an apparatus to generate a tracking error signal using a 3-beam method;

Figures 2A-2C are diagrams illustrating a principle of operation of the 3-beam method;

Figure 3 is a diagram illustrating a structure of an apparatus to generate a tracking error signal using a differential phase detection (DPD) method;

Figures 4A-4C are diagrams illustrating a principle of operation of the DPD method;

Figure 5 is a diagram of a structure of a differential push-pull (DPP) type photo detector;

Figure 6 is a schematic view illustrating a structure of an optical pickup included in a conventional optical storage drive for CDs and DVDs;

Figures 7A and 7B are views illustrating a relationship between a track pitch and a tracking error signal generated using the DPP method;

Figures 8A-8H are views illustrating waveform diagrams of signals generated during lead-in routines performed in relation to a normal disc, and a disc with a pitch depth of around $\lambda/4$ or a narrow track pitch, using the DPP method;

Figures 9A-9D are views illustrating waveform diagrams of tracking error signals that are generated using the DPP method and the DPD method, respectively, with respect to a disc with a pitch depth of around $\lambda/4$ or narrow track pitch;

Figure 10 is a flowchart illustrating a method of generating a tracking error signal according to an embodiment of the present invention;

Figure 11 is a flowchart illustrating a method of generating a tracking error signal according to another embodiment of the present invention;

Figure 12 is a block diagram illustrating a structure of an apparatus to generate a tracking error signal, according to an embodiment of the present invention;

Figure 13 is a block diagram illustrating a structure of an apparatus to generate a tracking error signal, according to another embodiment of the present invention; and

Figures 14A and 14B are flowcharts illustrating a lead-in control method according to an embodiment of the present invention.

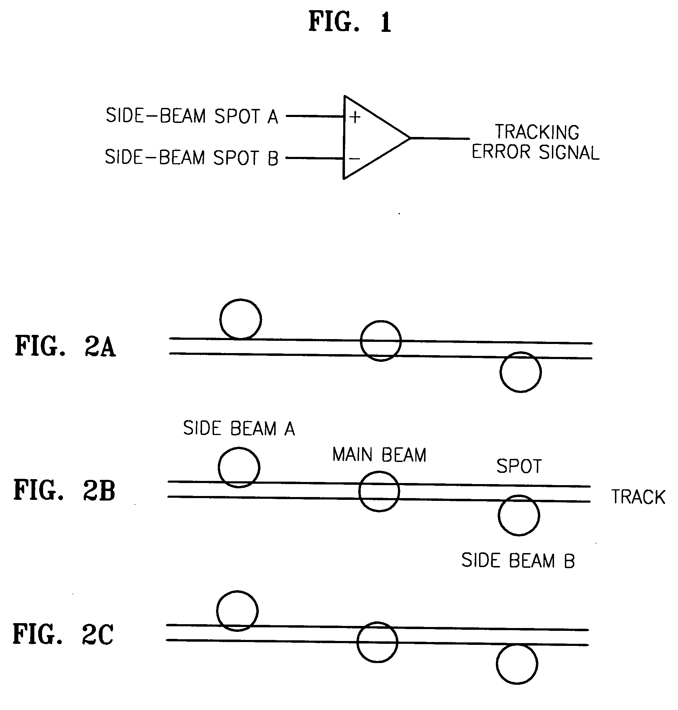

Figure 1 is a diagram illustrating a structure of an apparatus to generate a tracking error signal using a 3-beam method. Figure 2 is a diagram illustrating a principle of operation of the 3-beam method. One main beam and two side beams are used in the 3-beam method. Referring to Figure 2A, spots A and B generated by the respective side beams are formed on a track before and after the spot generated by the main beam, more specifically, the spots A and B generated by the respective side beams are deflected by half a pitch with respect to the spot generated by the main beam.

Figure 2B illustrates an ideal spot generated by the main beam, which is precisely formed on a center of the track. Portions of the spots A and B generated by two side beams lie upon the track. The side beams corresponding to the spots A and B are reflected from a disc and input to photo detectors. The photo detectors receive the side beams as input signals and output optical detection signals corresponding to magnitudes of the input signals. The outputs of the photo detectors are input to a subtracter, as shown in Figure 1. In this case, since the outputs of the photo detectors have a same absolute value, an output of the subtracter is 0.

When the spot generated by the main beam deviates from the center of the track, as shown in Figure 2A or 2C, the magnitudes of the input signals corresponding to the spots A and B are different from each other. Thus, an error signal is generated when the input signals pass through the subtracter. A polarity of the error signal indicates a direction toward which the main beam deviates from the track and a magnitude of the error signal represents an extent of a deviation.

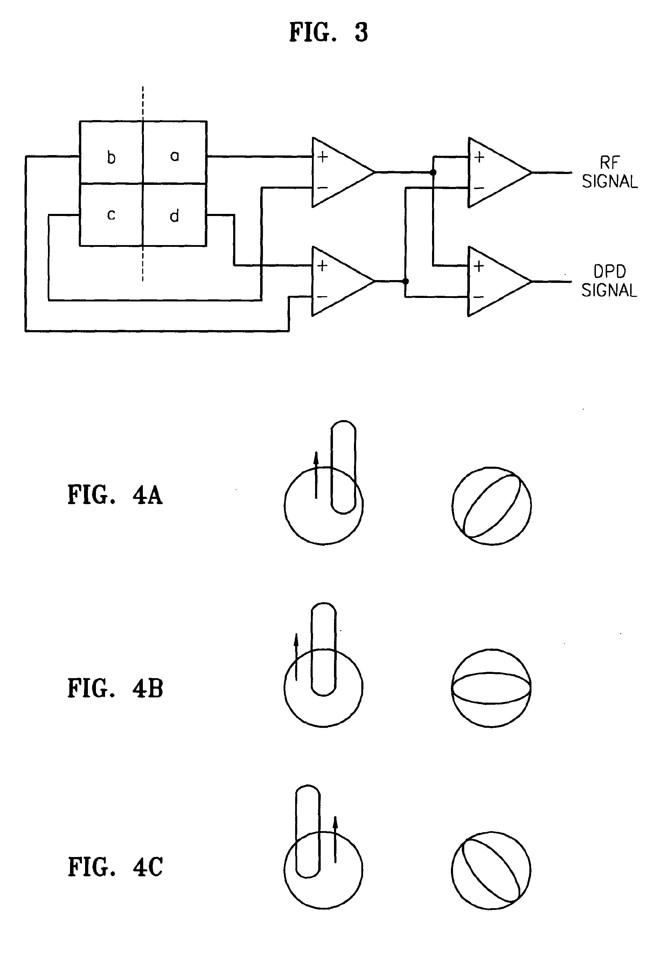

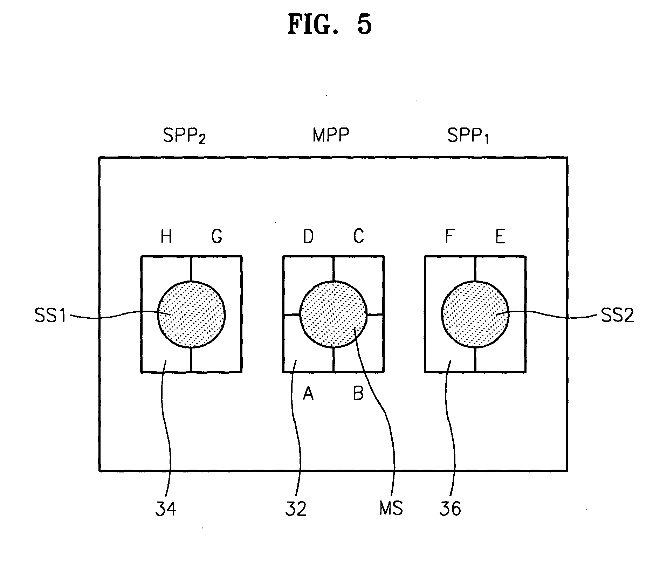

Figure 3 is a diagram illustrating a structure of an apparatus to generate a tracking error signal using a differential phase detection (DPD) method, the apparatus being included in an optical storage drive for DVDs. Figure 4 is a diagram illustrating a principle of operation of the DPD method.

The DPD method is an improvement over a push-pull (PP) method, in which a tracking error signal is generated using an intensity distribution of light caused by a change in a distance between a beam and a pit. Therefore, to stably generate a tracking error signal even for a disc with a pit depth of $\lambda/4$ is possible. An RF signal and a DPD signal generated by the apparatus of Figure 3 are as follows:

$$RF\ signal = a + b + c + d$$
$$DPD\ signal = (a + c) - (b + d)$$

$$\text{Equation (1)}$$

Here, the RF signal is a signal that is called a SUM signal and the DPD signal is a tracking error signal generated in the DPD method.

When a beam is precisely focused on the center of the track, a distribution of the beam is as illustrated in Figure 4B. In this case, a DPD signal has a zero value. Even if a disc rotates to move the beam in a direction of the track, a value of the DPD signal is maintained at a zero value.

When the beam is defocused from the center of the track, the distribution of the beam is as illustrated in Figures 4A or 4C. Thus, when the disc rotates to move the beam in the direction of the track, a DPD signal is shaped like a sine wave. Referring to Figures 4A and 4C, DPD signals are phase shifted from the RF signal by 90° in a phase thereof. For this reason, a direction and a degree of a tracking error is detectable with reference to the phase and magnitude of an RF signal.

Figure 5 is a diagram of a structure of a differential push-pull (DPP) photo detector used in an optical storage drive for CDs-R and DVDs-RAM.

In this case, a tracking error signal is generated using a spot *MS* generated by a main beam and first and second spots *SS1* and *SS2* generated by two side beams.

More specifically, in a DPP method, a diffraction unit is installed in a path of a beam emitted from a laser optical source on to a disc to form a main beam obtained from a 0th order diffraction light and two side beams obtained from a 1st order diffraction light. The main spot *MS* is used to record a signal on the disc and to reproduce the signal from the disc, and the side spots *SS1* and *SS2* are used to detect a tracking error. The spots MS, SS1 and SS2 are separated from one another by a track pitch.

As shown in Figure 5, a main photo detector 32, which receives a light corresponding to the main spot *MS*, is divided both in vertical and horizontal directions, i.e., the main photo detector 32 has a four-divided surface A to D. Side photo detectors 34 and 36, which receive lights corresponding to the side spots *SS1* and *SS2*, respectively, are divided in the vertical direction, i.e., the side photo detectors 34 and 36, each have two-divided surfaces EF and GH, respectively. When signals output from the surfaces of the main photo detector 32 and the surfaces of the side photo detectors 34 and 36 are indicated with A through H, as indicated in Figure 5, a tracking error signal is obtainable as follows:

$$MPP = (B + C) - (A + D)$$
$$SPP1 = E - F$$
$$SPP2 = G - H \qquad \text{Equation (2),}$$
$$DPP = MPP - k(SPP1 + SPP2)$$
$$\therefore \ DPP = \{(B + C) - (A + D)\} + k(SPP1 + SPP2)$$

wherein $k$ is a coefficient and *DPP* denotes a tracking error signal obtained using the DPP method.

Conventionally, to generate a tracking error signal, the 3-beam method was mainly used for read-only CDs, the DPD method is used for DVDs, and the DPP method is used for recordable/read-only discs.

In particular, an optical disc such as a CD-RW (compact disc rewritable) and a DVD-RAM (digital versatile disc random access memory) may include a blank region in which data is not recorded. Since a tracking error signal cannot be generated in the blank region using the DPD method, a tracking error signal is generated using the DPP method based on a wobble.

Further, optical storage drives for read-only CDs, such as CDs and CD-ROMs (CDs read-only-memory), recordable CDs, such as CD-Rs (CDs recordable) and CD-RWs, are nowadays frequently used. Accordingly, the DPP method, which may be performed on both a read-only CD and a recordable CD, is preferred to the 3-beam method only for a read-only CD and the DPP method for a recordable CD. Therefore, a tracking error signal is generated in a CD drive using the DPP method, not the 3-beam method.

In a disc storage drive for a CD and a DVD, the DPP method is performed regardless of a type of the CD, i. e., whether the CD is a read-only CD or a recordable CD need not be considered. Further, in a case of the DVD, the DPD method and the DPP method are performed for a read-only DVD and a recordable DVD, respectively.

Thus, a pickup uses the DPD method for DVDs and the DPP method for CDs, rather than the 3-beam method and the DPP method.

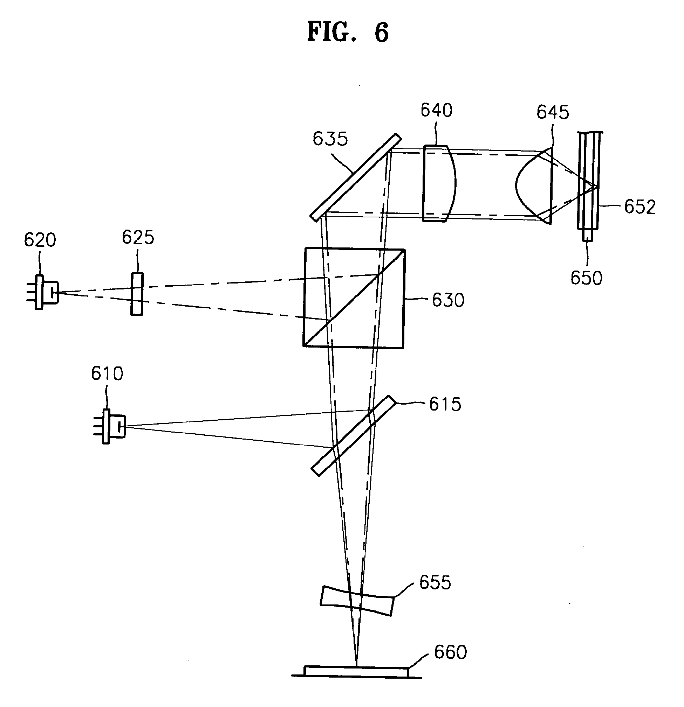

Figure 6 is a schematic view illustrating a structure of an optical pickup included in an optical storage drive for CDs and DVDs, which is disclosed in Korean Laid-Open Patent No. 2002- 79204 (laid-open date: 19 October 2002) filed by the present applicant.

Referring to Figure 6, the optical pickup includes a first optical source 610, for DVDs, which emits light having a wavelength of about 650 nm, and a second optical source 620, for CDs, that emits light having a wavelength of about 780 nm. The first and the second optical sources 610 and 620 are separated from each other. Light emitted from the first optical source 610 is incident upon a first beam splitter 615, reflected from the first beam splitter 615, and travels toward a DVD 650. The light reflecting from the DVD 650, passes through the first beam splitter 615, and is received by a photo detector 660. Further, a reflection mirror 635 that changes a path of the light emitted from the first and the second optical sources 610 and 620, a collimating lens 640 that collimates the light, and an objective lens 645 that focuses the light, which is incident on the DVD 650, are installed in an optical path between the first beam splitter 615 and the DVD 650.

Further, the light, which is emitted from the second optical source 620, passes through a grating 625, is reflected from a second beam splitter 630, sequentially passes through the reflection mirror 635, the collimating lens 640, and the objective lens 645, and is finally incident on a CD 652. The light reflected from the CD 652 is sequentially incident on the objective lens 645, the reflection mirror 635, the first and the second beam splitters 615 and 630, and is eventually received by the photo detector 660. A convergent lens 655 may be further installed between the first beam splitter 615 and the photo detector 660.

The photo detector 660 is as illustrated in Figure 5.

A tracking error signal is generated using the DPP method, as explained with reference to Figure 5, when reproducing information recorded on the CD 652 using the optical pickup of Figure 6. Also, a tracking error signal is generated using the DPD method as explained with reference to Figure 3, when reproducing information recorded on the DVD 650.

More specifically, when reproducing information recorded on the CD, the tracking error signal is generated using the main photo detector 32 that receives light corresponding to a main spot *MS,* and the side photo detectors 34 and 36 that receive lights corresponding to side spots *SS1* and *SS2*. In this case, the tracking error signal may be obtained as follows: *DPP = {(B + C) - (A + D)} + k(SPP1 + SPP2).*

When reproducing information recorded on the DVD, the tracking error signal is generated using the main photo detector 32 that receives light corresponding to the main spot MS. In this case, the tracking error signal is obtained as follows: *DPD = (A + C) - (B + D).*

Thus, the tracking error signal for the CD and the tracking error signal for the DVD may be generated using the main photo detector 32 that receives light corresponding to the main spot *MS* and the side photo detectors 34 and 36 that receives lights corresponding to the side spots *SS1* and *SS2*.

The DPP method is, however, disadvantageous in that to obtain the tracking error signal when a depth of a disc pit is $\lambda/4$, i.e., when the pit diffraction is most efficient and the degree of modulation has at the maximum value, is difficult.

More specifically, when the depth of the disc pit is $\lambda/4$, the tracking error signal cannot be obtained by a two-divided photo detector since incident light is symmetrical with reflected light. In the case of a normal CD, the disc pit is formed to a depth of $\lambda/5$ or $\lambda/6$, and thus, to generate the tracking error signal using the DPP method is possible.

However, for most defective discs, especially, illegally manufactured or low-quality CDs, disc pits are generally formed to a depth of about $\lambda/4$. In this case, a magnitude of the tracking error signal obtained using the DPP method is too small to stably generate a tracking servo signal.

Further, an increase in a recording density and a reduction in a track pitch result in a reduction in the magnitude of a tracking error signal obtained using the DPP method.

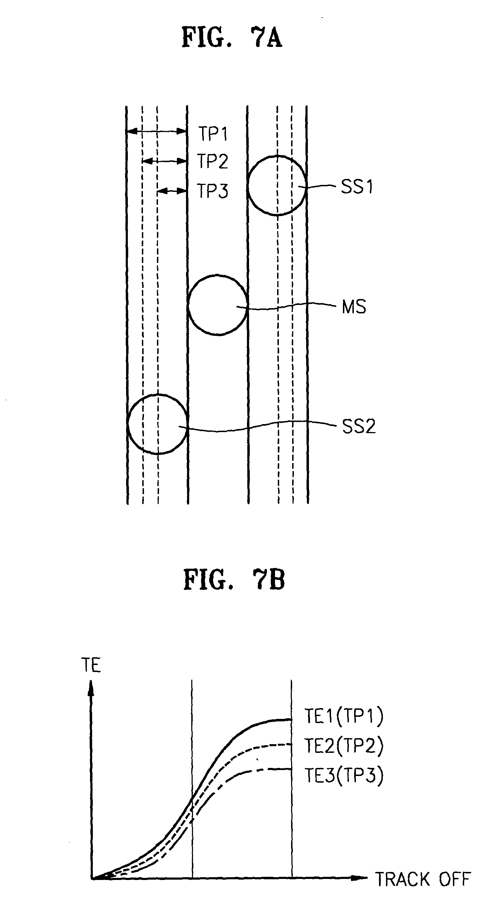

Figures 7A and 7B are views illustrating a relationship between a track pitch and a tracking error signal generated using a differential push-pull (DPP) method. As shown in Figure 7A, in a normal disc, a main spot *MS* and side spots *SS1* and *SS2* are separated from one another by the track pitch, and the tracking error signal is obtained as indicated with solid lines in Figure 7B.

Referring to Figure 7A, if the track pitch TP becomes narrower (i.e., it changing from TP1 to TP3), magnitudes of reflected lights corresponding to the side spots *SS1* and *SS2* become smaller. As a result, the magnitude of a tracking error signal TE becomes smaller (i.e., changing from *TE1* to *TE3*). That is, as the track pitch of a disc becomes narrower, to stably generate the tracking error signal is more difficult.

An optical storage drive for a CD and a DVD uses a pickup designed to be suitable for the DPD method and the DPP method. However, it is impossible to stably generate a tracking error signal using the DPP method in a case of a disc with the depth of a pit of around $\lambda/4$ or a narrow track pitch (e.g., a width of a track being less than that specified by a standard rule, which is a pitch of a CD equal to 1.6 $\mu$m or a pitch of a DVD equal to 0.74 $\mu$m), thereby causing a lead-in failure or an error in tracking operations of the optical storage drive.

For the disc with the pit depth of around $\lambda/4$ or the narrow track pitch, a pickup adequate for a 3-beam method is required. However, such a pickup has not yet been manufactured.

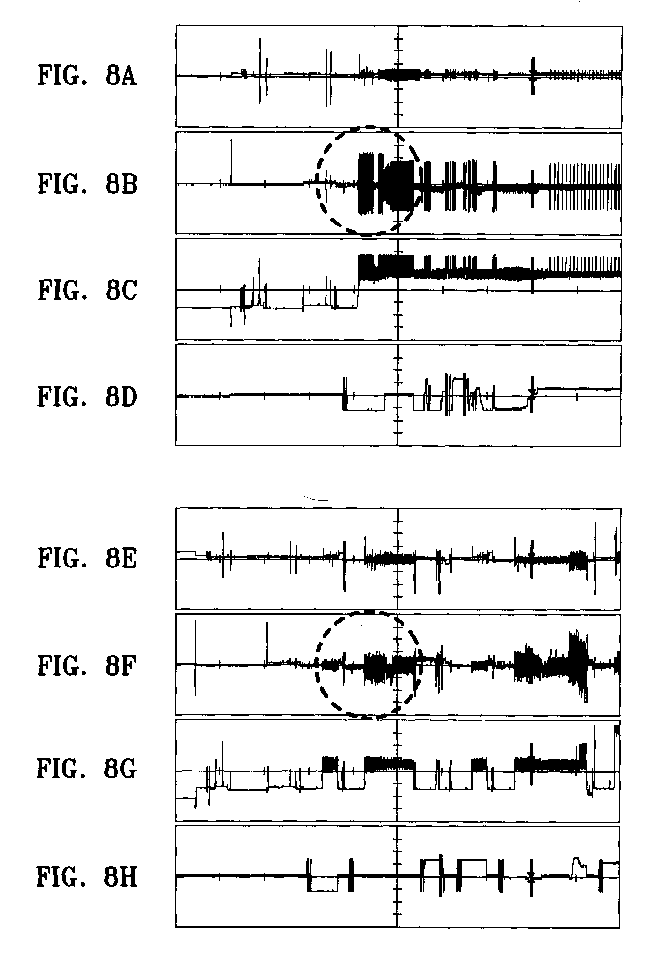

Figures 8A to 8H are views illustrating waveform diagrams of signals generated during a lead-in routine performed for a normal disc, and a disc with a pit depth of around $\lambda/4$ or a narrow track pitch, using the DPP method. In detail, Figures 8A to 8D and 8E to 8H, respectively and correspondingly include waveforms related to focus error signals, tracking error signals, RF signals, and track cross signals.

A tracking error signal is stably generated in a case of a normal disc, as shown by a dotted circle of Figure 8B, whereas the magnitude of the tracking error signal generated on the disc with the pit depth of around $\lambda/4$ or the narrow track pitch, is much narrower than that corresponding to the normal disc as shown by a dotted circle of Figure 8F.

As is apparent from Figure 8F, when the magnitude of a tracking error signal is small, the optical storage drive performs retry operations to obtain a tracking error signal having a desirable magnitude. If the optical storage drive fails to obtain a desirable signal a lead-in failure is processed.

Also, during tracking operations of the disc with the depth of the pit of around $\lambda/4$ or the narrow track pitch, a pickup is prone to being inclined toward one side because the magnitude of the tracking error signal is very small, thereby preventing a beam from being tracked on so that the spot of a beam is focused on the center of a track.

To solve this problem, the DPD method may be used when generating the tracking error signal for the disc with the pit depth of around $\lambda/4$ or the narrow track pitch. In this case, to use light suitable for CDs is important.

Conventionally, the DPD method is mainly used for DVDs and light suitable to DVDs is generally used when performing the DPD method. However, experiments reveal that to generate a tracking error signal to a desired magnitude using the DPD method by using a laser beam suitable for the CDs is possible.

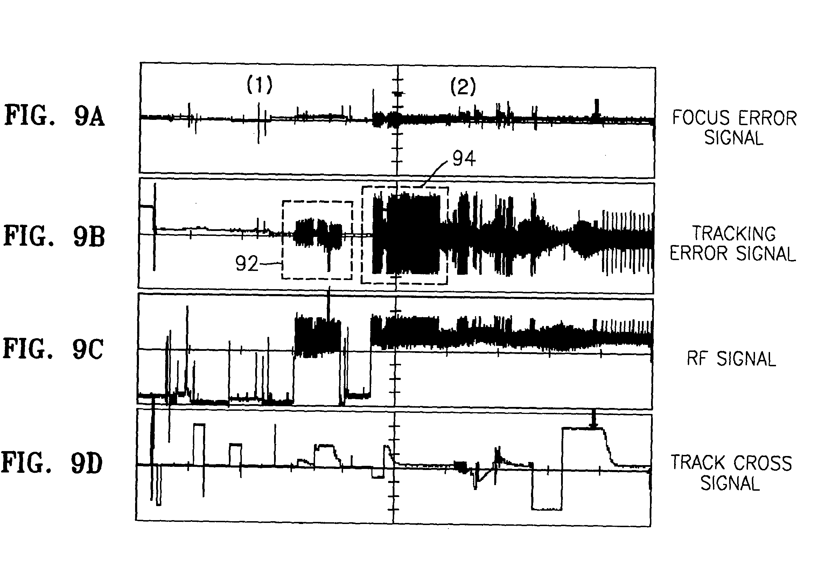

Figures 9A to 9D are views illustrating waveform diagrams of tracking error signals that are, respectively, generated for a disc with a pitch depth of around $\lambda/4$ or a narrow track pitch, using the DPP method and the DPD method, respectively. In detail, 9A to 9D are waveforms related to the focus error signals, the tracking error signals, the RF signals, and the track cross signals, respectively.

In Figure 9B, a dotted box 92 and a dotted box 94 illustrate tracking error signals that are obtained using the DPP method and the DPD method, respectively. Referring to Figures 9A to 9D, the tracking error signal is stably generated even for the disc with the pit depth of around $\lambda/4$ or the narrow track pitch when using the DPD method.

As is apparent from the box 92 of Figure 9B, when using the DPP method, the magnitude of the tracking error signal is so small that the tracking error signal makes an optical pickup shift to one side easily, thereby preventing ordinary tracking and data reading. As a result, the lead-in routine cannot be properly performed. To solve this problem, a level of the tracking error signal is detected, and the tracking error signal is again generated by the DPD method when the detected level is less than a predetermined threshold. The tracking error signal is obtainable to a desirable level as shown by the dotted box 94 of Figure 9B. Thus, a lead-in routine, as well as tracking and data reading, may be satisfactorily performed.

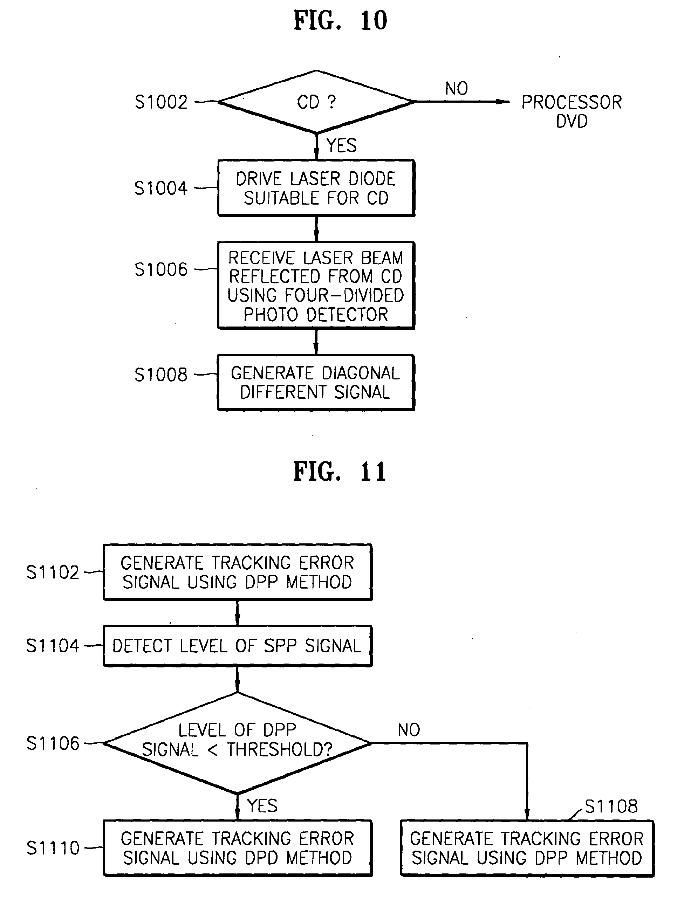

Figure 10 is a flowchart illustrating a method of generating a tracking error signal according to a first embodiment of the present invention. Referring to Figure 10, whether a media inserted into an optical storage drive is a CD or not is checked, in operation 1002. If in operation 1002 the media is determined to be a CD, a laser diode suitable for the CD is driven to generate an optical signal in operation 1004.

In operation 1006, one or more laser beams, which are emitted from the laser diode for the CD and reflected from the CD, are received by a four-divided photo detector. In this case, the four-divided photo detector corresponds to the main photo detector 32 of Figure 5, which receives light corresponding to the main spot *MS,* as shown in Figure 5.

In operation 1008, a tracking error signal is generated by calculating a diagonal difference signal of optical signals received by the four-divided main photo detector 32. That is, the tracking error signal is obtained as DPD = (A + C) - (B + D).

An apparatus to generate the tracking error signal for the CD, is as shown in Figure 3 and uses the laser diode suitable for the CD. Thus, the apparatus will not be illustrated here. In summary, the apparatus includes a four-divided photo detector that receives laser beams, which are emitted from a laser diode and reflected from the CD, the surfaces of the photo detector being divided twice in the vertical and horizontal directions; and an operation unit that calculates a diagonal difference signal of optical signals received by the four-divided photo detector so as to obtain the tracking error signal.

Figure 11 is a flowchart illustrating a method of generating a tracking error signal, according to a second embodiment of the present invention. Referring to Figure 11, if a media inserted into in an optical storage drive is a CD, a tracking error signal is generated using the DPP method in operation 1102. In operation 1104, a level of a DPP signal is detected. In operation 1106, the level of the DPP signal is compared with a predetermined threshold. In operation 1108, the tracking error signal is generated using the DPP method when the level of the DPP signal is the same as or larger than the predetermined threshold. However, the tracking error signal is generated using the DPD method when the level of the DPP signal is less than the predetermined threshold, in operation 1110.

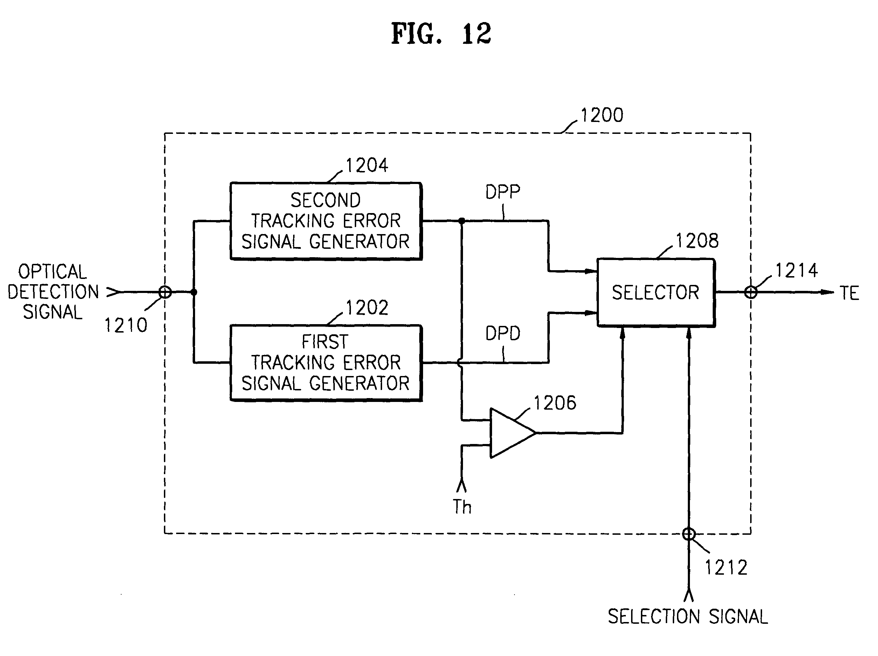

Figure 12 is a block diagram illustrating a structure of an apparatus 1200 that generates a tracking error signal according to a third embodiment of the present invention. The apparatus 1200 generates a tracking error signal for a CD with an optical detection signal generated by a photo detector that generates an electrical signal corresponding to an intensity of a laser beam reflected from a CD surface.

The apparatus 1200 includes a first tracking error signal generator 1202 that receives an optical detection signal input from a first input terminal 1210 and generates a tracking error signal with the optical detection signal using the DPD method; a second tracking error signal generator 1204 that receives an optical detection signal input from the first input terminal 1210 and generates a tracking error signal with the optical detection signal using the DPP method; a comparator 1206 that compares an output of the second tracking error signal generator 1204 with a predetermined threshold Th; and a selector 1208 that selects one of the outputs of the first and second tracking error signal generators 1202 and 1204, based on a selection signal input from a second input terminal 1212 or a comparison result determined by the comparator 1206, and outputs a tracking error signal *TE* as the selected output to an output terminal 1214.

The optical detection signal input from the first input terminal 1210 is a signal, for example, that is generated by the photo detector shown in Figure 5. In this case, the optical detection signal contains a main photo detection signal and side optical detection signals.

The first tracking error signal generator 1202 receives the main optical signal of optical detection signals input from the first input terminal 1210 and generates a tracking error signal with the main optical signal using the DPD method. The structure and operations of the first tracking error signal generator 1202 are as explained with reference to Figure 3 and Equation (1).

The tracking error signal generator 1204 receives the main optical detection signal and the side optical detection signals of optical detection signals input from the first input terminal 1210 and generates the tracking error signal with the received signals using the DPP method. The operations of the second tracking error signal generator 1204 are as explained with reference to Equation (2).

The operations of the apparatus 1200 shown in Figure 12 will now be described. When a DVD is loaded into an optical storage drive, the selection signal input from the second input terminal 1212 indicates a loading of the DVD. A method of determining a type of disc loaded into the optical storage drive is well known to those skilled in the art and thus a detailed description thereof will be omitted here. The selection signal may be generated by a microprocessor that controls an optical disc player.

In response to the selection signal, the selector 1208 selects a first tracking error signal, for the DVD, which is generated by the first tracking error signal generator 1202 using the DPD method, and outputs the tracking error signal to the output terminal 1214.

When a CD is loaded into the optical storage drive, the selection signal input from the second input terminal 1212 indicates the loading of the CD. In response to the selection signal, the selector 1208 selects a second tracking error signal generated by the second tracking error signal generator 1204 using the DPP method and outputs the tracking error signal to the output terminal 1214.

If the level of the second tracking error signal, which is generated using the DPP method, is less than a predetermined threshold Th, the first tracking error signal, which is generated using the DPD method, is selected by the comparator 1206 and output to the output terminal 1214.

More specifically, the comparator 1206 outputs a signal with a low level when the level of the second tracking error signal is less than the predetermined threshold Th. On the contrary, the comparator 1206 outputs a signal with a high level when the level of the tracking error signal is equal to or larger than the predetermined threshold Th. If the signal output from the comparator 1206 has the low level, the selector 1208 operates only in response to the selection signal input from the second input terminal 1212. That is, the selector 1208 selects the output of the first tracking error signal generator 1202 when the selection signal indicates the loading of the DVD, and selects the output of the second tracking error signal when the selection signal indicates the loading of the CD.

If the signal output from the comparator 1206 has the high level and the selection signal input from the second input terminal 1212 indicates the loading of the CD, the selector 1208 selects an output of the first tracking error signal generator 1202.

When the DVD is loaded into the optical storage drive, the apparatus 1200 of Figure 12 outputs the first tracking error signal generated by the first tracking error signal generator 1202 using the DPD method. Also, when a CD is loaded into the optical storage drive, the apparatus 1200 outputs the second tracking error signal generated by the second tracking error signal generator 1204 using the DPP method, or the tracking error signal generated by the first tracking error signal generator 1202 using the DPD method. Accordingly, the tracking error signal may be stably generated even for a CD having non-uniform pit depths or non-uniform track pitches.

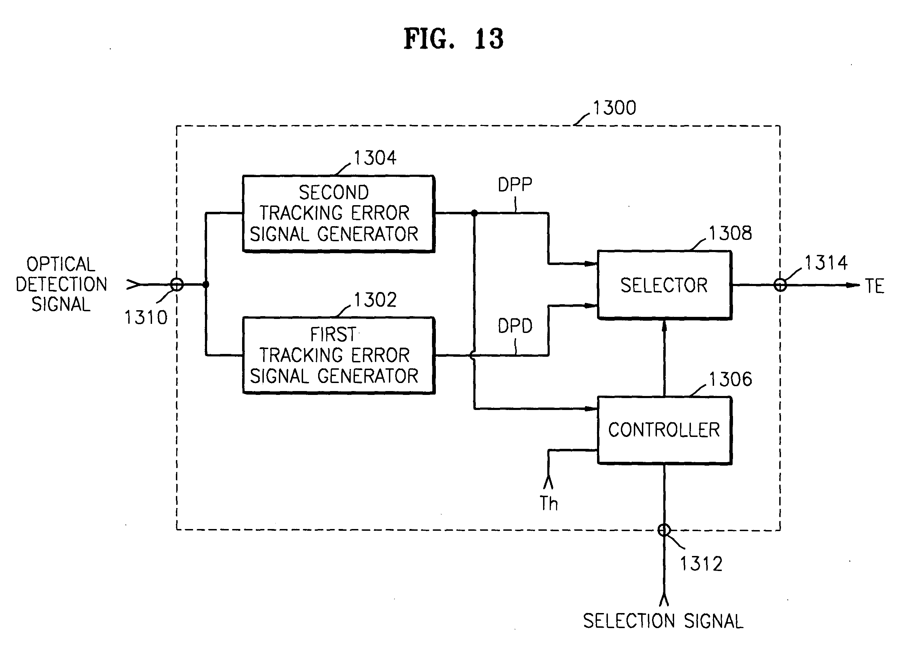

Figure 13 is a block diagram of an apparatus 1300 that generates a tracking error signal according to an embodiment of the present invention. Referring to Figure 13, the apparatus includes a first tracking error signal generator 1302, a second tracking error signal generator 1304, a first input terminal 1310, a second input terminal 1312, and output terminal 1314. The operations of these elements are the same as those of the elements of the apparatus of Figure 12 and thus their descriptions will be omitted.

Unlike the apparatus 1200 of Figure 12, the apparatus 1300 includes a controller 1306 instead of the comparator 1206, and a selector 1308 controlled by the controller 1306. The controller 1306 may be a microprocessor that processes digital signals.

The operations of the apparatus 1300 will now be described. First, when a DVD is loaded into an optical storage drive, a selection signal input from the second input terminal 1312 indicates the loading of the DVD.

In response to the selection signal, the controller 1306 controls the selector 1308 to select a first tracking error signal, for the DVD, which is generated by the first tracking error signal generator 1302 using the DPD method, and output the tracking error signal to the output terminal 1314.

If a CD is loaded into the optical storage drive, the selection signal input from the second input terminal 1312 indicates the loading of the CD. In response to the selection signal, the controller 1306 controls the selector 1308 to select a second tracking error signal, which is generated by the second tracking error signal 1304 using the DPP method, and outputs the tracking error signal to the output terminal 1314.

When a level of the second tracking error signal is less than a predetermined threshold Th, the controller 1306 controls the selector 1308 to select and output the first tracking error signal.

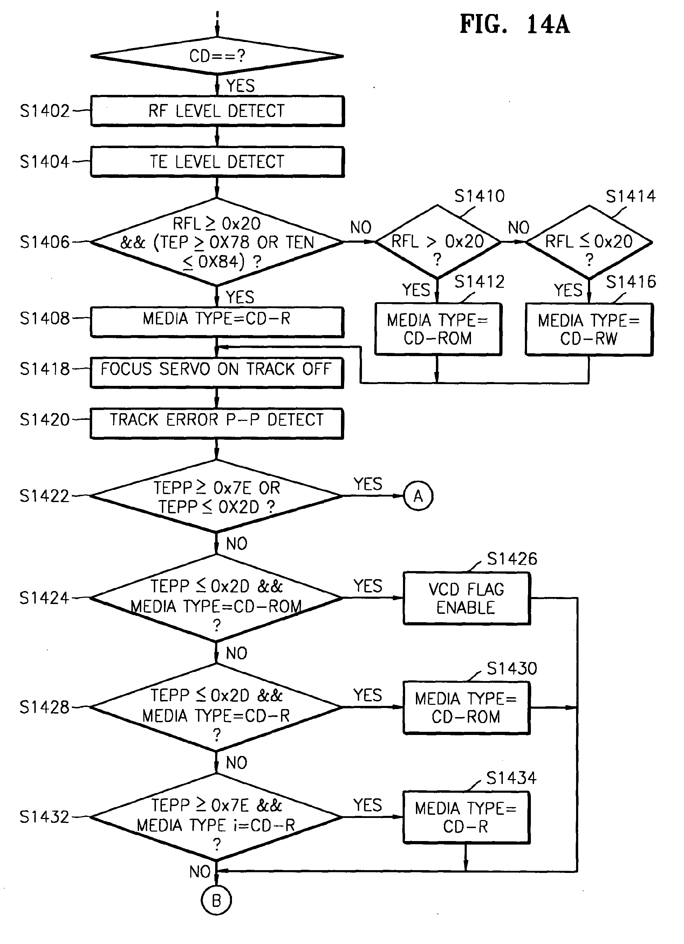

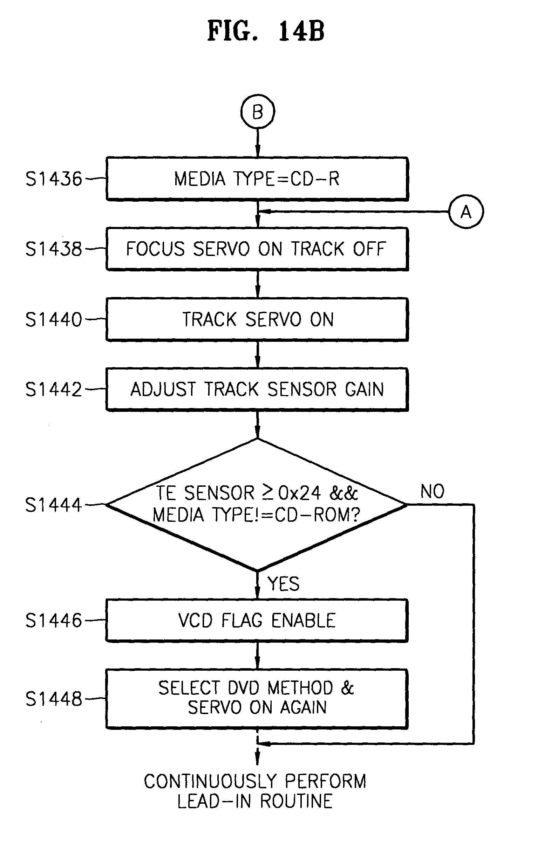

Figures 14A and 14B are flowcharts illustrating a lead-in control method according to an embodiment of the present invention.

A lead-in routine performed is largely divided into a detection operation and an adjustment operation. The detection operation checks a type of a media inserted into an optical storage drive and the adjustment operation adjusts gains based on the detection result.

In the lead-in control method, a tracking error signal is first generated using the DPP method, a level of the tracking error signal is compared with a predetermined threshold, and a lead-in routine is performed using either the DPP method or the DPD method, based on a comparison result.

More specifically, when a medium loaded into the optical storage drive is a CD, a level $RFL$ of an RF signal is detected in operation 1402. In this case, a tracking error signal is generated using the DPP method. The level of the RF signal is required to determine a type of the CD. In general, a reflectance of the CD is different according to the type of the CD and the level $RFL$ of the RF signal depends on the reflectance of the CD. Therefore, the type of the CD may be determined using the level $RFL$ of the RF signal. A method of determining the type of the CD is well known to those ordinary in the art and thus will not be described here.

In operation 1404, a level $TEL$ of the tracking error signal is detected, using a peak value $TEP$ and a bottom value $TEN$ thereof.

In operation 1406 through 1416, the type of the loaded CD is determined using the level $RFL$ of the RF signal and the level $TEL$ of the tracking error signal.

First, whether the level *RFL* of the RF signal is greater than a first threshold, the peak level *TEP* of the tracking error signal is the same or greater than a second threshold, and the bottom level *TEN* of the tracking error signal is less than a third threshold are checked, in operation 1406. In this case, the first through third thresholds are values used when determining whether the CD is a CD-R.

If all of conditions checked in operation 1406 are satisfied, the loaded media is determined to be the CD-R in operation 1408, and operation 1418 is performed.

However, when the conditions checked in operation 1406 are not satisfied, whether the level *RFL* of the RF signal is greater than the first threshold is checked in operation 1410. If the level RFL of the RF signal is greater than the first threshold, the loaded media is determined to be a CD-ROM in operation 1412, and operation 1418 is performed.

If it is determined in operation 1410 that the level *RFL* of the RF signal is not greater than the first threshold, whether the level *RFL* of the RF signal is the same as or less than the first threshold is checked in operation 1414. When the level *RFL* of the RF signal is the same as or less than the first threshold, the loaded media is determined to be a CD-RW in operation 1416 and operation 1418 is performed.

In operation 1418, a laser beam is focused on the loaded media in an off-track state. In operation 1420, a level TEPP of a tracking error PP signal is detected. In this case, the tracking error PP signal is a tracking error signal that has not yet been amplified. The tracking error PP signal may be applied as a DPP signal and a DPD signal.

In operations 1422 through 1436, whether the loaded media is the CD with the pit depth of about $\lambda/4$ or the narrow track pitch is checked using the level *TEPP* of the tracking error PP signal, and further, the conditions checked in operations 1406 through 1416 are reconsidered.

In detail, in operation 1422, whether the level *TEPP* of the tracking error PP signal is the same as or greater than a fourth threshold or is the same as or less than a fifth threshold is checked.

If conditions checked in operation 1422 are not satisfied, operation 1438 is performed.

If the conditions checked in operation 1422 are satisfied, whether the level TEPP of the tracking error PP signal is the same as or less than the fifth threshold and whether the loaded media is set to the CD-ROM, in operation 1424 is checked. When conditions checked in operation 1424 are satisfied, a VCD flag is enabled in operation 1426, and operation 1436 is performed. The VCD flag indicates that the loaded media is the CD with a pit depth of around $\lambda/4$ or a narrow track pitch.

When the conditions in operation 1424 are not satisfied, whether the level *TEPP* of the tracking error PP signal is the same as or less than the fifth threshold and the loaded media is detected as a CD-R is checked, in operation 1428. If conditions checked in operation 1428 are satisfied, the loaded media is detected as the CD-ROM in operation 1430, and operation 1436 is performed.

If the conditions in operation 1428 are not satisfied, whether the level *TEPP* of the tracking error PP signal is the same as or greater than the fourth threshold and the loaded media is set to the CD-R is checked, in operation 1432. In the case that conditions checked in operation 1432 are satisfied, the loaded media is detected as the CD-R in operation 1434, and operation 1436 is performed. If the conditions checked in operation 1428 are not satisfied, operation 1436 is performed.

In operation 1436, a digital signal processor (DSP) and an RF gain are initialized based on the type of the loaded media determined in operation 1436. The DSP is an apparatus that generates various types of servo signals or modulates/demodulates an RF signal, and the RF gain is an amplification circuit that outputs a normal RF signal.

In operation 1438, focusing is performed using a focus servo. The reason for carrying out focusing in the off-track state in operation 1418 is to prevent data recorded on the loaded media from being affected by settings for different types of a media.

In operation 1440, tracking is performed using a tracking servo. That is, a tracking servo operation is performed using a DPP signal.

In operation 1442, a gain *TE_SENSOR* of a tracking sensor is adjusted.

In operation 1444, whether the gain *TE_SENSOR* of the tracking sensor is the same as or greater than a sixth threshold and the inserted media is a CD-R is checked. Here, the gain *TE_SENSOR* of the tracking sensor denotes a degree to which the tracking error PP signal is amplified to generate a tracking error signal within a desired dynamic range.

If conditions checked in operation 1444 are not satisfied, the lead-in routine is continuously performed.

If the conditions checked in operation 1444 are satisfied, the VCD flag is enabled in operation 1446.

In operation 1448, the DVD method is selected and a focus servo is switched on. Thus, if the VCD flag is enabled in operation 1446, the loaded media is determined as the CD with the pit depth of about $\lambda/4$ or the narrow track pitch and the lead-in routine is continuously performed using the DPP method.

According to the embodiment described with reference to Figures 14A and 14B, when a gain of the tracking sensor is greater than the fifth threshold and the loaded media is the CD-R, the loaded media is considered as being an illegally manufactured disc having the pit a depth of around $\lambda/4$ or the narrow track pitch. Thus, a tracking error signal is generated using the DPD method, not the DPP method. In this case, the tracking error signal has a desirable magnitude as shown in Figure 8B.

Conventionally, during a lead-in routine, a retry operation is continuously repeated and as a result, the lead-in routine is processed as a lead-in failure when a tracking error signal is generated on a disc with the depth of a pit of around $\lambda/4$ or a narrow track pitch using the DPP method. However, according to the present invention, it is possible to successfully perform the lead-in routine by generating a tracking error signal using the DPD method.

As is described above, even if a disc has a depth of a pit of around $\lambda/4$ or a narrow track pitch, a tracking error signal having a desirable magnitude is obtainable, thereby rendering a lead-in routine and data reproduction successfully.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of generating a tracking error signal using laser beams reflected from a surface of a compact disc, comprising:

    detecting the reflected laser beams using a photo detector (32); and

    generating a first tracking error signal based on optical signals received by the photo detector (32), using a differential phase detection method and outputting the first tracking error signal as the tracking error signal.

2. The method of claim 1, further comprising:

    generating a second tracking error signal based on the optical signals received by the photo detector (32) using a differential push-pull method;

    determining whether a level of the second tracking error signal is equal to or greater than a level of a predetermined threshold signal; and

    outputting the second tracking error signal as the tracking error signal when the level of the second tracking error signal is equal to or greater than the level of the predetermined threshold signal.

3. An apparatus to generate a tracking error signal using laser beams reflected from a surface of a compact disc, comprising:

    a first input terminal (1210) receiving one or more optical detection signals, indicating intensities of the reflected laser beams, that are input;

    a first tracking error signal generator (1202) that receives the one or more optical detection signals input from the first input terminal (1210) and that generates a first tracking error signal based on the input optical detection signals using a differential phase detection method; and

an output terminal (1214) through which the first tracking error signal, generated by the first tracking error signal generator (1202), is outputtable.

4. The apparatus of claim 3, further comprising:

a second tracking error signal generator (1204) that generates a second tracking error signal based on optical signals received by a photo detector (32) using a differential push-pull method;

a second input terminal (1212) through which a selection signal is input; and

a selector (1208) that selects one of the first and second tracking error signals in response to the selection signal input from the second input terminal (1212) and outputs the selected tracking error signal to the output terminal (1214).

5. The apparatus of claim 4, further comprising:

a comparator (1206) that determines whether a level of the second tracking error signal is equal to or greater than a level of a predetermined threshold signal, wherein the selector (1208) selects and outputs the second tracking error signal when the level of the second tracking error signal is equal to or greater than the level of the predetermined threshold signal.

6. The apparatus of claim 3, 4 or 5, further comprising:

a second tracking error signal generator (1204) that generates a second tracking error signal based on optical signals received by a photo detector (32) using a differential push-pull method;

a second input terminal (1212) through which a selection signal is input;

a selector (1208) that selects one of the first and second tracking error signals and outputs the selected tracking error signal to the output terminal (1214); and

a controller (1306) that controls the selector (1208) in response to the selection signal input from the second input terminal (1212) and a result of comparing a level of the second tracking error signal with that of a predetermined threshold signal.

7. An optical storage drive to reproduce information recorded on a compact disc, comprising:

an optical source that emits laser beams having wavelengths to reproduce the information from the compact disc;

an optical detector (32) that receives the laser beams reflected from a surface of the compact disc and generates optical detection signals corresponding to intensities of the reflected laser beams; and

a tracking error signal generating unit (1200) that generates tracking error signals in response to the optical detection signals generated by a photo detector (32), and comprises:

a first input terminal (1210) to receive the optical detection signals from the optical detector (32);

a first tracking error signal generator (1202) that receives the optical detection signals input from the first input terminal (1210) and generates a first tracking error signal based on the optical detection signals using a differential phase detection method; and

an output terminal (1214) to which the first tracking error signal generated by the first tracking error signal generator (1202) is output.

8. The optical storage drive of claim 7, wherein the tracking error signal generating unit (1200) further comprises:

a second tracking error signal generator (1204) that generates a second tracking error signal based on the optical signals received by the photo detector (32) using a differential push-pull method;

a second input terminal (1212) through which a selection signal is input; and

a selector (1208) that selects one of the first and second tracking error signals in response to the selection signal input from the second input terminal (1212) and outputs the selected tracking error signal to the output terminal (1214).

9. The optical storage drive of claim 8, wherein the tracking error signal generating unit (1200) further comprises:

a comparator (1206) that determines whether a level of the second tracking error signal is equal to or greater than a level of a predetermined threshold signal, wherein the selector (1208) selects and outputs the second tracking error signal when the level of the second tracking error signal is equal to or greater than that of the predetermined threshold signal.

10. The optical storage drive of claim 7, 8 or 9, wherein the tracking error signal generating unit (1200) further comprises:

a second tracking error signal generator (1204) that generates a second tracking error signal based on the optical signals received by the photo detector (32) using a differential push-pull method;

a second input terminal (1212) through which a selection signal is input;

a selector (1208) that selects one of the first and second tracking error signals and outputs the selected cracking error signal to the output terminal (1214); and

a controller (1306) that controls the selector (1208) in response to the selection signal input from the second input terminal (1212) and a result of comparing a level of the second tracking error signal with a level of a predetermined threshold signal.

11. A lead-in control method of an optical storage drive that uses a differential phase detection method for a digital versatile disc and a differential push-pull method for a compact disc, comprising:

detecting a level of a tracking error signal generated using the differential phase detection method and a level of an RF signal when a medium loaded into the optical storage drive is the compact disc;

determining a type of the loaded media based on the level of the tracking error signal generated by the differential phase detection method and the level of the RF signal;

detecting an amplification gain to obtain the tracking error signal within a dynamic range;

comparing the amplification gain with a predetermined threshold; and

performing a lead-in routine using the differential push-pull method when the amplification gain is less than the predetermined threshold, and performing the lead-in routine using the differential phase detection method otherwise.

12. A method of generating a tracking error signal using laser beams reflected from a surface of a compact disc, comprising:

generating optical detection signals corresponding to intensities of the laser beams reflected from the surface of the compact disc; and

generating the tracking error signal based on photo detection signals using a differential phase detection method.

13. The method of claim 12, further comprising:

generating a second tracking error signal based on the optical detection signals using a differential push-pull method;

determining whether a level of the second tracking error signal, which is generated using the differential push-pull method, is equal to or greater than that of a predetermined threshold signal; and

selecting and outputting the second tracking error signal, which is generated using the differential push-pull method, as the tracking error signal when the level of the tracking error signal is equal to or greater than that of the predetermined threshold signal.

**14.** An apparatus to generate a tracking error signal using laser beams reflected from a surface of a compact disc, comprising:

a first input terminal (1210) to receive optical detection signals from an external optical detector (32);

a first tracking error signal generator (1202) that receives the optical detection signals input from the first input terminal (1210) and generates a first tracking error signal based on the optical detection signals using the differential phase detection method; and

an output terminal (1214) to which the first tracking error signal, generated by the first tracking error signal generator (1202), is output.

**15.** The apparatus of claim 14, further comprising:

a second tracking error signal generator (1204) that generates a second tracking error signal based on the optical detection signals received by the photo detector (32) using a differential push-pull method;

a second input terminal (1212) through which a selection signal is input; and

a selector (1208) that selects one of the first and second tracking error signals in response to the selection signal input from the second input terminal (1212) and outputs the selected tracking error signal to the output terminal (1214).

**16.** The apparatus of claim 15, further comprises:

a comparator (1206) that determines whether a level of the second tracking error signal is equal to or greater than that of a predetermined threshold signal, wherein the selector (1208) selects and outputs the second tracking error signal when the level of the second tracking error signal is equal to or greater than that of the predetermined threshold signal.

**17.** The apparatus of claim 14, further comprising:

a second tracking error signal generator (1204) that generates a second tracking error signal based on optical detection signals received by the photo detector (32) using a differential push-pull method;

a second input terminal (1212) through which a selection signal is input;

a selector (1208) that selects one of the first and second tracking error signals and outputs the selected tracking error signal to the output terminal (1214); and

a controller (1306) that controls the selector (1208) in response to the selection signal input from the second input terminal (1212) and a result of comparing the level of the second tracking error signal with that of the predetermined threshold signal.

**18.** A method of generating a tracking error signal using laser beams reflected from a surface of a compact disc, comprising:

detecting the reflected laser beams using a photo detector (32);

generating a first tracking error signal based on optical signals received by the photo detector (32), using a differential phase detection method;

generating a second tracking error signal based on the optical signals received by the photo detector (32) using a differential push-pull method;

determining a level of the second tracking error signal; and

outputting the tracking error signal corresponding to one of the first and second tracking error signals according to whether the level of the second tracking error signal is equal to or greater than a threshold level.

19. An apparatus to generate a selected tracking signal using laser beams reflected from a surface of a compact disc, comprising:

a first input terminal (1210) receiving optical detection signals, indicating intensities of the reflected laser beams, that are input;

a first signal generator (1202) receiving the optical detection signals input from the first input terminal (1210) and generating a first tracking signal based on the input optical detection signals using a differential phase detection method;

a second signal generator (1204) receiving the optical detection signals input from the first input terminal (1210) and generating a second tracking signal based on the input optical detection signals using a differential push-pull method;

a second input terminal (1212) through which a selection signal is input;

a selector (1208) selecting one of the first and second tracking signals, as the selected tracking signal, in response to the selection signal input from the second input terminal (1212); and

an output terminal (1214) outputting the selected tracking signal.

20. An apparatus to generate a tracking signal using laser beams reflected from a surface of a compact disc, comprising:

first and second photo detectors (32,34) outputting first and second optical detection signals, respectively, indicating intensities of the reflected laser beams;

a first signal generator (1202) receiving first optical detection signals from a first photo detector (32) and generating a first tracking signal based on the first optical detection signals using a differential phase detection method;

a second signal generator (1204) generating a second tracking signal based on the first and second optical signals using a differential push-pull method; and

a selector (1208) selecting and outputting one of the first and second tracking signals, as the selected tracking signal, according to whether a level of the second tracking signal is equal to or greater than a threshold level.

21. An apparatus to generate a selected tracking signal using laser beams reflected from a surface of a compact disc, comprising:

first and second photo detectors (32,34) outputting first and second optical detection signals, respectively, indicating intensities of the reflected laser beams;

a first signal generator (1202) to generate a first tracking signal based on the first optical detection signals using a differential phase detection method;

a second signal generator (1204) generating a second tracking signal based on the first and second optical detection signals using a differential push-pull method; and

a selector (1208) selecting and outputting one of the first and second tracking signals, as the selected tracking signal, according to whether a level of the second tracking signal is equal to or greater than a threshold level.

22. An apparatus to generate a selected tracking signal using laser beams reflected from a surface of a compact disc, comprising:

a first signal generator (1202) to generate a first tracking signal based on first optical detection signals corresponding to first intensities of the reflected laser beams using a differential phase detection method;

a second signal generator (1204) generating a second tracking signal based on the first optical detection signals and second optical detection signals corresponding to the first intensities and second intensities, respectively, of the reflected laser beams using a differential push-pull method; and

a selector (1208) selecting and outputting the selected tracking signal according to a level of the second tracking signal.

23. The apparatus of claim 22, further comprising:

a comparator (1206) determining whether a level of the second tracking signal is equal to or greater than a level of a threshold signal, wherein the selector (1208) selects and outputs the second tracking signal when the level of the second tracking signal is less than the level of the threshold signal.

24. The apparatus of claim 22, further comprising:

a controller (1306) controlling the selector (1208) in response to a selection signal and a result of comparing the level of the second tracking signal with that of a threshold signal.

25. The apparatus of claim 22, further comprising:

a photo detecting unit to detect the intensities of reflected laser beams and comprises:

a main photo detector (32); and

two side photo detectors (34,36) adjacent to opposite sides of the main detector, wherein the main photo detector (32) detects the intensities of a main beam and the two side photo detectors (34,36) detect the intensities of two side beams, respectively.

26. The apparatus of claim 22, wherein the selected tracking signal is stable for a compact disk having a pit depth of around $\lambda/4$, a non-uniform pit depth and/or a non-uniform track pitch.

27. An optical storage drive to reproduce information recorded on a compact disc, comprising:

an optical source to emit laser beams having wavelengths to reproduce the information from the compact disc;

an optical detector (32) to receive the laser beams reflected from a surface of the compact disc and to generate optical detection signals corresponding to intensities of the reflected laser beams; and

a tracking signal generating unit to generate tracking signals in response to the optical detection signals generated by the optical detector (32), and comprises:

a first photo detector (32) to detect first optical detection signals a first tracking signal generator to receive the first optical detection signals input from the first photo detector (32) and to generate a first tracking signal based on the first optical detection signals using a differential phase detection method.

28. An optical storage drive to reproduce information recorded on a compact disc, comprising:

an optical source to emit laser beams having wavelengths to reproduce the information from the compact disc;

first and second optical detectors to receive the laser beams reflected from a surface of the compact disc and to generate first and second optical detection signals, respectively, corresponding to intensities of the reflected laser beams; and

a tracking signal generating unit to generate first and second tracking signals in response to the first and second optical detection signals, respectively, and comprises:

a first signal generator (1202) receiving the first optical detection signals input from the first optical detector and generating the first tracking signal based on the first optical detection signals using a differential phase detection method;

a second signal generator (1204) receiving the second optical detection signals input from the second optical detector and generating the second tracking signal based on the first and second optical detection signals using a differential push-pull method; and

a selector (1208) selecting and outputting one of the first and second tracking signals, as a selected tracking signal, in response to a selection signal.

29. An optical storage drive to reproduce information recorded on a compact disc, comprising:

an optical source to emit laser beams to reproduce the information from the compact disc; and

a tracking signal generating unit to generate first and second tracking signals in response to laser beams reflected from the compact disc, and comprises:

first and second photo detectors outputting first and second optical detection signals, respectively, indicating intensities of the reflected laser beams;

a first signal generator (1202) receiving the first optical detection signals from the first photo detector (32) and generating the first tracking signal based on the first optical detection signals using a differential phase detection method;

a second signal generator (1204) generating the second tracking signal based on the first and second optical detection signals using a differential push-pull method; and

a selector (1208) selecting and outputting one of the first and second tracking signals, as a selected tracking signal, according to whether a level of the second tracking signal is equal to or greater than a threshold level.

30. An optical storage drive to reproduce information recorded on a compact disc, comprising:

an optical source to emit laser beams to reproduce the information from the compact disc;

a tracking signal generating unit to generate first and second tracking signals in response laser beams reflected from the compact disk, and comprises:

a first signal generator (1202) to generate the first tracking signal based on the first optical detection signals using a differential phase detection method;

a second signal generator (1204) to generate the second tracking signal based on the first and second optical detection signals using a differential push-pull method; and

a selector (1208) to select and output one of the first and second tracking signals, as a selected tracking signal, according to whether a level of the second tracking signal is equal to or greater than a threshold level.

**31.** An optical storage drive to reproduce information recorded on a compact disc, comprising:

an optical source to emit laser beams to reproduce the information from the compact disc;

a first signal generator (1202) to generate a first tracking signal based on first optical detection signals corresponding to the reflected laser beams using a differential phase detection method;

a second signal generator (1204) to generate a second tracking signal based on the first optical detection signals and second optical detection signals corresponding to the reflected laser beams using a differential push-pull method; and

a selector (1208) selecting and outputting a selected tracking signal according to a level of the second tracking signal.

**32.** The drive of claim 31, further comprising:

a comparator (1206) determining whether the level of the second tracking signal is equal to or greater than a level of a threshold signal, wherein the selector (1208) selects and outputs the second tracking signal when the level of the second tracking error signal is equal to or greater than the level of the threshold signal.

**33.** The drive of claim 31, further comprising:

a controller (1306) controlling the selector (1208) in response to a selection signal and a result of comparing the level of the second tracking signal with a level of a threshold signal.

**34.** The drive of claim 31, further comprising:

a photo detecting unit to detect the intensities of the reflected laser beams and comprises:

a main photo detector (32); and

two side photo detectors (34,36) adjacent to opposite sides of the main detector, wherein the main photo detector (32) detects the intensities of a main beam and the two side photo detectors (34,36) detect two side beams, respectively.

**35.** The drive of claim 31, wherein the selected tracking signal is stable for a compact disk having a pit depth of around 8/4, a non-uniform pit depth and/or a non-uniform track pitch.

**36.** A lead-in control method of an optical storage drive that uses a differential phase detection method for a digital versatile disc and a differential push-pull method for a compact disc, comprising:

detecting a level of a tracking signal generated using the differential phase detection method and a level of an RF signal;

determining a type of the loaded media based on a result of the detecting;

calculating an amplification gain to produce the tracking signal within a dynamic range; and

performing a lead-in routine using one of the differential push-pull method and the differential phase detection method according to the calculated amplification gain.

**37.** A lead-in control method of a device to record and reproduce information from a medium, comprising:

detecting a level of a tracking signal generated using a differential phase detection method and a level of an RF signal;

determining a type of the loaded media based on a result of the detecting;

calculating an amplification gain to produce the tracking signal within a range; and

performing a lead-in routine using one of a differential push-pull method and the differential phase detection method according to the calculated amplification gain.

# FIG. 1

SIDE–BEAM SPOT A ——— +
SIDE–BEAM SPOT B ——— −

TRACKING
ERROR SIGNAL

FIG. 2A

FIG. 2B

SIDE BEAM A

MAIN BEAM

SPOT

TRACK

SIDE BEAM B

FIG. 2C

# FIG. 3

FIG. 4A

FIG. 4B

FIG. 4C

# FIG. 5

# FIG. 6

# FIG. 7A

TP1
TP2
TP3

SS1

MS

SS2

# FIG. 7B

TE

TE1(TP1)
TE2(TP2)
TE3(TP3)

TRACK OFF

FIG. 8A

FIG. 8B

FIG. 8C

FIG. 8D

FIG. 8E

FIG. 8F

FIG. 8G

FIG. 8H

FIG. 9A  FOCUS ERROR SIGNAL

FIG. 9B  TRACKING ERROR SIGNAL

FIG. 9C  RF SIGNAL

FIG. 9D  TRACK CROSS SIGNAL

# FIG. 10

S1002 — ⟨ CD ? ⟩ —NO→ PROCESSOR DVD

↓ YES

S1004 — DRIVE LASER DIODE SUITABLE FOR CD

S1006 — RECEIVE LASER BEAM REFLECTED FROM CD USING FOUR-DIVIDED PHOTO DETECTOR

S1008 — GENERATE DIAGONAL DIFFERENT SIGNAL

# FIG. 11

S1102 — GENERATE TRACKING ERROR SIGNAL USING DPP METHOD

S1104 — DETECT LEVEL OF SPP SIGNAL

S1106 — ⟨ LEVEL OF DPP SIGNAL < THRESHOLD? ⟩ —NO→ S1108 GENERATE TRACKING ERROR SIGNAL USING DPP METHOD

↓ YES

S1110 — GENERATE TRACKING ERROR SIGNAL USING DPD METHOD

# FIG. 12

# FIG. 13

EP 1 426 936 A2

**FIG. 14A**

CD==?

YES

S1402 — RF LEVEL DETECT

S1404 — TE LEVEL DETECT

S1406 — RFL ≥ 0x20 && (TEP ≥ 0X78 OR TEN ≤ 0X84) ?

NO → S1410 RFL > 0x20 ?

NO → S1414 RFL ≤ 0x20 ?

YES

S1408 — MEDIA TYPE=CD-R

YES S1412 — MEDIA TYPE= CD-ROM

YES S1416 — MEDIA TYPE= CD-RW

S1418 — FOCUS SERVO ON TRACK OFF

S1420 — TRACK ERROR P-P DETECT

S1422 — TEPP ≥ 0x7E OR TEPP ≤ 0X2D ?    YES → (A)

NO

S1424 — TEPP ≤ 0x2D && MEDIA TYPE=CD-ROM ?    YES → S1426 VCD FLAG ENABLE

NO

S1428 — TEPP ≤ 0x2D && MEDIA TYPE=CD-R ?    YES → S1430 MEDIA TYPE= CD-ROM

NO

S1432 — TEPP ≥ 0x7E && MEDIA TYPE i=CD-R ?    YES → S1434 MEDIA TYPE= CD-R

NO

(B)

# FIG. 14B

B

S1436 — | MEDIA TYPE=CD-R |

A

S1438 — | FOCUS SERVO ON TRACK OFF |

S1440 — | TRACK SERVO ON |

S1442 — | ADJUST TRACK SENSOR GAIN |

S1444 — TE SENSOR ≥ 0x24 && MEDIA TYPE!=CD-ROM?  —  NO

YES

S1446 — | VCD FLAG ENABLE |

S1448 — | SELECT DVD METHOD & SERVO ON AGAIN |

CONTINUOUSLY PERFORM
LEAD-IN ROUTINE